(19) Europäisches Patentamt / European Patent Office / Office européen des brevets

(11) **EP 4 341 897 B1**

(12) **FASCICULE DE BREVET EUROPEEN**

(45) Date de publication et mention
de la délivrance du brevet:
**14.08.2024   Bulletin 2024/33**

(21) Numéro de dépôt: **23776079.8**

(22) Date de dépôt: **27.07.2023**

(51) Classification Internationale des Brevets (IPC):
*G06T 7/246* [(2017.01)]

(52) Classification Coopérative des Brevets (CPC):
**G06T 7/248;** G06T 2207/10016; G06T 2207/20021;
G06T 2207/30212

(86) Numéro de dépôt international:
**PCT/FR2023/051186**

(87) Numéro de publication internationale:
**WO 2024/033583 (15.02.2024 Gazette 2024/07)**

(54) **PROCÉDÉ ET DISPOSITIF DE TRAITEMENT D'UNE SÉQUENCE D'IMAGES POUR LA DÉTERMINATION DE VIGNETTES POURSUIVIES DANS LADITE SÉQUENCE D'IMAGES**

VERFAHREN UND VORRICHTUNG ZUR VERARBEITUNG EINER BILDSEQUENZ ZUR BESTIMMUNG VON MINIATURBILDERN FÜR ÄUSSERUNGEN IN DIESER BILDSEQUENZ

METHOD AND DEVICE FOR PROCESSING A SEQUENCE OF IMAGES IN ORDER TO DETERMINE CONTINUOUS THUMBNAILS IN SAID SEQUENCE OF IMAGES

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité:  **08.08.2022   FR 2208163**

(43) Date de publication de la demande:
**27.03.2024   Bulletin 2024/13**

(73) Titulaire: **Airbus Defence and Space SAS
31402 Toulouse Cedex 4 (FR)**

(72) Inventeur: **BROCHARD, Roland
31402 Toulouse Cedex 4 (FR)**

(74) Mandataire: **Plasseraud IP
104 Rue de Richelieu
CS92104
75080 Paris Cedex 02 (FR)**

(56) Documents cités:
- **PING-FENG CHEN ET AL: "Multiphase Joint Segmentation-Registration and Object Tracking for Layered Images", IEEE TRANSACTIONS ON IMAGE PROCESSING, IEEE, USA, vol. 18, no. 7, July 2010 (2010-07-01), pages 1706 - 1719, XP011304891, ISSN: 1057-7149**
- **SCHOLARSARCHIVE BYU ET AL: "Brigham Young University Detecting and Tracking Moving Objects from a Small Unmanned Air Vehicle", 2015, XP093042773, Retrieved from the Internet <URL:https://www.proquest.com/docview/2498472044?pq-origsite=gscholar&fromopenview=true> [retrieved on 20230428]**
- **SUN WEI ET AL: "Small Moving Object Tracking in Dynamic Video", 2015 INTERNATIONAL CONFERENCE ON INTELLIGENT INFORMATION HIDING AND MULTIMEDIA SIGNAL PROCESSING (IIH-MSP), IEEE, 23 September 2015 (2015-09-23), pages 239 - 242, XP032869785, DOI: 10.1109/IIH-MSP.2015.25**
- **JONG SUE ET AL: "Image Tracking Algorithm using Template Matching and PSNF-m 413 Image Tracking Algorithm using Template Matching and PSNF-m", 2008, XP093043888, Retrieved from the Internet <URL:http://ijcas.com/admin/paper/files/ijcas_v6_n3_pp.413-423.pdf> [retrieved on 20230503]**
- **HUA YANG ET AL: "Occlusion and Motion Reasoning for Long-Term Tracking", 2014, 16TH EUROPEAN CONFERENCE - COMPUTER VISION - ECCV 2020, PAGE(S) 172 - 187, XP047531149**

• **PENG CHENG ET AL: "Real-Time Continuous Image Registration Enabling Ultraprecise 2-D Motion Tracking", IEEE TRANSACTIONS ON IMAGE PROCESSING, IEEE, USA, vol. 22, no. 5, May 2013 (2013-05-01), pages 2081 - 2090, XP011497806, ISSN: 1057-7149, DOI: 10.1109/TIP.2013.2244608**

## Description

### Domaine technique

La présente invention appartient au domaine général du traitement d'images, et concerne plus particulièrement un procédé de traitement d'une séquence d'images d'une scène acquise par un senseur de vision pour la détermination de vignettes poursuivies dans ladite séquence d'images.

La présente invention trouve une application particulièrement avantageuse, bien que nullement limitative, dans le cas de systèmes de navigation basée vision (« Vision-Based Navigation » ou VBN dans la littérature anglo-saxonne), pour estimer le mouvement par rapport à la scène d'un engin portant le senseur de vision.

### Etat de la technique

Dans les systèmes de navigation basée vision, il est connu de déterminer des vignettes caractéristiques poursuivies (« tracking » dans la littérature anglo-saxonne) dans une séquence d'images acquise par un senseur de vision d'un engin, par exemple aérien ou spatial.

Dans les solutions de l'art antérieur, les vignettes caractéristiques dans les images représentent des éléments caractéristiques de la scène. Un élément caractéristique de la scène est un élément dont la représentation dans l'image, en tant qu'ensemble de pixels, présente la propriété de pouvoir être aisément retrouvée d'une image à l'autre (augmentation de la probabilité de détection), par exemple par corrélation d'image ou par reconnaissance de forme, et de pouvoir être difficilement confondue avec une autre partie de l'image (diminution de la probabilité de fausse alerte). Une vignette caractéristique de l'image peut être par exemple une vignette de quelques pixels à quelques centaines de pixels dans lesquels il existe des variations de luminance ou de texture ou de contraste dans au moins deux directions.

Ainsi, la première étape dans un système de navigation basée vision consiste à détecter des vignettes caractéristiques dans une image de la séquence, par un traitement du contenu de l'image pour identifier des zones présentant de bonnes propriétés, par exemple d'autocorrélation.

Les vignettes caractéristiques sont ensuite poursuivies d'une image à une autre. Du fait du mouvement de l'engin par rapport à la scène, les positions des éléments caractéristiques de la scène, représentés par les vignettes caractéristiques, varient d'une image à une autre (certains éléments caractéristiques pouvant disparaître lorsqu'ils ne sont plus visibles). Le déplacement dans les images des vignettes caractéristiques au cours de la séquence, lorsqu'elles sont supposées représenter des éléments immobiles de la scène, permet par exemple d'estimer le mouvement de l'engin par rapport à la scène.

Dans de tels systèmes de navigation basée vision, les mesures images (positions successives dans les images des vignettes caractéristiques poursuivies) sont généralement combinées à des mesures de navigation fournies par des senseurs de navigation (récepteur GPS, accéléromètre, odomètre, gyroscope, etc.). Les demandes de brevet EP 2428934 A1 et EP 3227860 A1 décrivent des exemples de tels systèmes de navigation combinant des mesures images avec des mesures de navigation.

Afin de recaler une paire d'images acquises par des senseurs de vision différents, l'article Ping-Fent Chen et al.: "Multiphase Joint Segmentation-Registration and Object Tracking for Layered Images", IEEE Transactions on Image Processing, IEEE, USA, vol. 18, no. 7, juillet 2010, pages 1706-1719, XP011304891, ISSN: 1057-7149 propose de faire une segmentation des images afin d'y détecter des contours d'objets de la scène. Pour un même contour dans la paire d'images, il est supposé qu'il est se trouve dans un plan de la scène, et l'article propose de déterminer une transformation (transformation affine) permettant de passer du contour dans une image de la paire au contour dans l'autre image de la paire. La segmentation étant une méthode itérative, la transformation ainsi déterminée est utilisée pour affiner les contours au sein de chaque image. Dans l'article, les vignettes caractéristiques qui sont recherchées dans les différentes images correspondent à des contours de la scène, qui sont des éléments caractéristiques qui ne peuvent être identifiés et détectés qu'en analysant le contenu des images et cette détermination des contours dans une image correspond d'ailleurs à une segmentation de cette image, c'est-à-dire un traitement les pixels de l'image pour déterminer lesquels représentent un contour et lesquels ne représentent pas un contour.

Toutefois, la détermination de vignettes caractéristiques poursuivies dans une séquence d'images nécessite une complexité de calcul importante (notamment pour la détection des vignettes caractéristiques dans une image, mais également pour leur poursuite d'une image à une autre). Or les capacités de calcul embarquées dans des engins aériens ou spatiaux sont généralement limitées, de sorte qu'il peut s'avérer difficile dans certains cas de réaliser la poursuite des vignettes caractéristiques en temps-réel ou quasi-temps-réel lorsque c'est nécessaire, comme c'est généralement le cas dans un contexte de navigation aérienne ou spatiale.

### Exposé de l'invention

La présente invention a pour objectif de remédier à tout ou partie des inconvénients de l'art antérieur, notamment ceux exposés ci-avant, en proposant une solution qui permette de réduire la complexité de calcul associée à la détermination de vignettes poursuivies dans une séquence d'images, tout en conservant de bonnes performances sur la poursuite et une bonne précision sur l'estimation des positions respectives des vignettes poursuivies dans les images de la séquence.

A cet effet, et selon un premier aspect, il est proposé un procédé de traitement d'une séquence d'images d'une scène, lesdites images de la séquence étant acquises successivement par un senseur de vision, ledit procédé comportant au moins une détermination, dans une image dite de référence, de positions de vignettes, cette détermination des positions des vignettes dans l'image de référence étant réalisée indépendamment du contenu de ladite image de référence, et une poursuite desdites vignettes, à partir des positions des vignettes dans l'image de référence, dans chacune d'une pluralité d'images dites de poursuite acquises après ladite image de référence, la poursuite des vignettes comportant, pour chaque image de poursuite traitée :

- une détermination d'une transformation de recalage globale prédite entre l'image de référence et l'image de poursuite traitée,
- une prédiction des positions des vignettes, dans l'image de poursuite traitée, en fonction des positions des vignettes dans l'image de référence et de la transformation de recalage globale prédite pour l'image de poursuite traitée,
- une recherche des vignettes dans l'image de poursuite traitée, à partir des positions prédites des vignettes.

Ainsi, le procédé de traitement propose de simplifier significativement la détection des vignettes à poursuivre, puisque leurs positions dans une image sont déterminées indépendamment du contenu de l'image, par exemple de manière aléatoire. Il n'y a donc pas de traitement du contenu de l'image pour détecter des vignettes caractéristiques présentant de bonnes propriétés. Les positions des vignettes sont choisies de manière arbitraire dans l'image (ou au moins dans des sous-images de celle-ci). Par conséquent, les vignettes ne sont pas assurées de présenter de bonnes propriétés pour la poursuite. La complexité de calcul pour la détection est donc significativement réduite (puisqu'aucun traitement du contenu de l'image n'est requis), mais la qualité pour la poursuite des vignettes n'est pas vérifiée au stade de la détection (contrairement aux vignettes caractéristiques des solutions de l'art antérieur).

Toutefois, plusieurs aspects du procédé de traitement permettent d'atteindre de bonnes performances, malgré la qualité non vérifiée des vignettes associées aux positions déterminées arbitrairement.

Tout d'abord, l'image dite de référence dans laquelle sont déterminées les positions des vignettes est utilisée pour rechercher les vignettes dans une pluralité d'images suivantes, dites images de poursuite. De telles dispositions permettent de réduire les accumulations d'erreurs par rapport aux solutions qui utilisent systématiquement l'image précédente pour la poursuite dans l'image traitée.

En outre, la poursuite comporte une détermination d'une transformation de recalage globale prédite entre l'image de poursuite traitée et l'image de référence. Il est à noter que la transformation de recalage est dite « globale » simplement pour préciser qu'elle correspond à la transformation de recalage par rapport à l'image de référence.

Du fait du déplacement de l'engin et du fait que la même image de référence est considérée pour une pluralité d'images de poursuite, la géométrie d'acquisition d'une image de poursuite peut, au fil des acquisitions, devenir très différente de celle de l'image de référence, ce qui peut rendre plus difficile la poursuite des vignettes. La transformation de recalage globale prédite est donc utilisée pour mettre en correspondance les pixels de l'image de référence avec les pixels de l'image de poursuite traitée.

En particulier, la transformation de recalage globale prédite permet de prédire les positions des vignettes dans l'image de poursuite traitée, ce qui permet de faciliter et d'accélérer leur recherche dans l'image de poursuite traitée.

Ainsi, la combinaison de ces caractéristiques (détermination des positions des vignettes indépendamment du contenu de l'image de référence, utilisation d'une même image de référence pour plusieurs images de poursuite, détermination d'une transformation de recalage globale prédite pour prédire les positions des vignettes dans l'image de poursuite suivante) permet de réduire la quantité de calculs requis tout en conservant de bonnes performances sur la poursuite et une bonne précision sur l'estimation des positions respectives des vignettes poursuivies dans les images de la séquence.

Dans des modes particuliers de mise en oeuvre, le procédé de traitement peut comporter en outre, de manière optionnelle, l'une ou plusieurs des caractéristiques suivantes, prises isolément ou selon toutes les combinaisons techniquement possibles.

Dans des modes particuliers de mise en oeuvre, la transformation de recalage globale prédite comporte un modèle de mouvement introduit par un mouvement relatif entre le senseur de vision et la scène.

Dans des modes particuliers de mise en oeuvre, le modèle de mouvement correspond à une homographie.

Une telle homographie, qui modélise le mouvement d'un plan en supposant que les éléments de la scène représentés par les vignettes sont situés dans un même plan, s'appuie donc sur une approximation de la géométrie générale de la scène. Toutefois, une telle approximation s'avère suffisante dans de nombreux cas et une telle homographie présente en outre l'avantage de pouvoir être estimée avec une complexité limitée.

Dans des modes particuliers de mise en oeuvre, la transformation de recalage globale prédite comporte un modèle de distorsion optique introduite par le senseur de vision.

De telles dispositions sont avantageuses car elles permettent de prendre en compte des déformations géométriques, introduites par une optique du senseur de vision, qui dépendent des positions des éléments de la scène dans un champ de vue de l'optique.

Dans des modes particuliers de mise en oeuvre, pour les images de poursuite à partir de la deuxième image de poursuite suivant l'image de référence, la transformation de recalage globale prédite pour l'image de poursuite traitée est déterminée en fonction d'une transformation de recalage globale estimée entre l'image de référence et une image qui précède ladite image de poursuite traitée dans la séquence d'images, la transformation de recalage globale estimée étant déterminée, au moyen d'un estimateur robuste, en fonction de positions de vignettes retrouvées dans ladite image précédente en fonction des positions des vignettes dans l'image de référence.

Dans des modes particuliers de mise en oeuvre, la transformation de recalage globale prédite pour l'image de poursuite traitée correspond à la transformation de recalage globale estimée entre l'image de référence et l'image qui précède l'image de poursuite traitée dans la séquence d'images.

Dans des modes particuliers de mise en oeuvre, la détermination de la transformation de recalage globale prédite pour l'image de poursuite traitée comporte :

- une estimation d'une transformation de recalage dite locale entre les deux images qui précèdent l'image de poursuite traitée dans la séquence d'images,
- une combinaison de ladite transformation de recalage locale estimée et de la transformation de recalage globale estimée entre l'image de référence et l'image qui précède l'image de poursuite traitée dans la séquence d'images.

Dans des modes particuliers de mise en oeuvre, l'estimateur robuste attribue, à chaque vignette retrouvée dans une image de poursuite, un indicateur de compatibilité avec la transformation de recalage globale estimée, et seules des vignettes retrouvées qui sont compatibles avec la transformation de recalage globale estimée d'après leurs indicateurs de compatibilité sont conservées en tant que vignettes retrouvées.

Dans des modes particuliers de mise en oeuvre, l'estimateur robuste est de type RANSAC.

Dans des modes particuliers de mise en oeuvre, la recherche des vignettes dans l'image de poursuite traitée comporte :

- un recalage de l'image de référence en appliquant à ladite image de référence la transformation de recalage globale prédite pour l'image de poursuite traitée,
- une poursuite des vignettes dans l'image de poursuite en utilisant l'image de référence recalée.

Dans des modes particuliers de mise en oeuvre, seules les vignettes de l'image de référence sont recalées en appliquant la transformation de recalage globale prédite.

Dans des modes particuliers de mise en oeuvre, le recalage d'une vignette utilise une approximation locale de la transformation de recalage globale prédite obtenue par un développement limité de ladite transformation de recalage globale prédite au niveau de la position prédite pour ladite vignette dans l'image de poursuite traitée.

Dans des modes particuliers de mise en oeuvre, les positions des vignettes sont déterminées de manière aléatoire dans l'image de référence.

Dans des modes particuliers de mise en oeuvre, l'image de référence étant décomposée en une pluralité de sous-images, les positions des vignettes sont déterminées de sorte que chaque sous-image parmi une pluralité de sous-images de l'image de référence comporte au moins une vignette.

Dans des modes particuliers de mise en oeuvre, les positions prédites sont estimées en appliquant la transformation de recalage globale prédite aux positions des vignettes dans l'image de référence.

Dans des modes particuliers de mise en oeuvre, le procédé de traitement comporte une sélection d'une nouvelle image de référence lorsqu'un critère prédéterminé de renouvellement d'image de référence est vérifié.

Dans des modes particuliers de mise en oeuvre, le critère de renouvellement d'image de référence est vérifié lorsqu'une proportion de vignettes pouvant être poursuivies dans l'image de poursuite suivante est inférieure à un seuil prédéterminé et/ou lorsque les vignettes pouvant être poursuivies dans l'image de poursuite suivante présentent une répartition spatiale insuffisante dans ladite image de poursuite suivante.

Dans des modes particuliers de mise en oeuvre, les vignettes pour la nouvelle image de référence comportent des vignettes de l'image de référence précédente qui ont pu être poursuivies jusqu'à la nouvelle image de référence, complétées par des vignettes dont les positions sont déterminées dans ladite nouvelle image de référence indépendamment d'un contenu de ladite nouvelle image de référence.

Dans des modes particuliers de mise en oeuvre, la recherche des vignettes dans une image de poursuite met en oeuvre un algorithme de poursuite de type Kanade-Lucas-Tomasi, KLT.

Selon un deuxième aspect, il est proposé un procédé d'estimation du mouvement d'un engin aérien ou spatial, ledit mouvement étant estimé au moins en fonction de positions, dans une séquence d'images acquise par un senseur de vision embarqué dans ledit engin, de vignettes poursuivies dans ladite séquence d'images, les positions desdites vignettes poursuivies dans la séquence d'images étant déterminées selon un procédé de traitement selon l'un quelconque des modes de mise en oeuvre de la présente divulgation.

Selon un troisième aspect, il est proposé un produit programme d'ordinateur comportant des instructions qui, lorsqu'elles sont exécutées par au moins un processeur, configurent ledit au moins un processeur pour mettre en oeuvre un procédé de traitement selon l'un quelconque des modes de mise en oeuvre de la présente divulgation.

Selon un quatrième aspect, il est proposé un dispositif de calcul comportant au moins un processeur et au moins une mémoire, ledit au moins processeur étant configuré pour mettre en oeuvre un procédé de traitement selon l'un quelconque des modes de mise en oeuvre de la présente divulgation.

Selon un cinquième aspect, il est proposé un engin aérien ou spatial, comportant au moins un senseur de vision et un dispositif de calcul selon l'un quelconque des modes de réalisation de la présente divulgation. Il est à noter qu'on entend par engin spatial tout engin évoluant en dehors de l'atmosphère de la Terre, y compris un engin évoluant au sol sur un corps céleste autre que la Terre (satellite, navette spatiale, rover, etc.).

**Présentation des figures**

L'invention sera mieux comprise à la lecture de la description suivante, donnée à titre d'exemple nullement limitatif, et faite en se référant aux figures qui représentent :

- [Fig. 1] Figure 1 : une représentation schématique d'un engin embarquant un senseur de vision pour l'acquisition d'images d'une scène par rapport à laquelle l'engin est susceptible de se déplacer,
- [Fig. 2] Figure 2 : un diagramme illustrant les principales étapes d'un exemple de mise en oeuvre d'un procédé de traitement d'une séquence d'images acquises par un senseur de vision,
- [Fig. 3] Figure 3 : une représentation schématique de pixels de deux images représentant de mêmes éléments d'une scène,
- [Fig. 4] Figure 4 : une représentation schématique de trajectoires, dans un plan focal du senseur de vision, de vignettes poursuivies dans une séquence d'images,
- [Fig. 5] Figure 5 : un diagramme illustrant les principales étapes d'un exemple de mise en oeuvre d'une recherche de vignettes dans une image de poursuite,
- [Fig. 6] Figure 6 : un diagramme illustrant les principales étapes d'un autre exemple de mise en oeuvre d'un procédé de traitement d'une séquence d'images acquises par un senseur de vision,
- [Fig. 7] Figure 7 : un diagramme illustrant les principales étapes d'un autre exemple de mise en oeuvre d'un procédé de traitement d'une séquence d'images acquises par un senseur de vision,
- [Fig. 8] Figure 8 : un diagramme illustrant les principales étapes d'un exemple de mise en oeuvre d'un procédé d'estimation de mouvement d'un engin aérien ou spatial.

Dans ces figures, des références identiques d'une figure à une autre désignent des éléments identiques ou analogues. Pour des raisons de clarté, les éléments représentés ne sont pas à l'échelle, sauf mention contraire.

En outre, l'ordre des étapes indiqué sur ces figures est donné uniquement à titre d'exemple non limitatif de la présente divulgation qui peut être appliquée avec les mêmes étapes exécutées dans un ordre différent.

**Description des modes de réalisation**

Tel qu'indiqué ci-dessus, la présente invention concerne un procédé 20 de traitement d'une séquence d'images d'une scène.

La séquence d'images est acquise par un senseur de vision 11, qui est par exemple embarqué dans un engin 10 spatial ou aérien susceptible de se déplacer par rapport à la dite scène. Il est à noter qu'on entend par engin spatial tout engin évoluant en dehors de l'atmosphère de la Terre, y compris un engin évoluant au sol sur un corps céleste autre que la Terre (satellite, navette spatiale, rover, etc.). Un engin aérien peut être tout engin volant dans l'atmosphère de la Terre (avion, hélicoptère, drone, etc.).

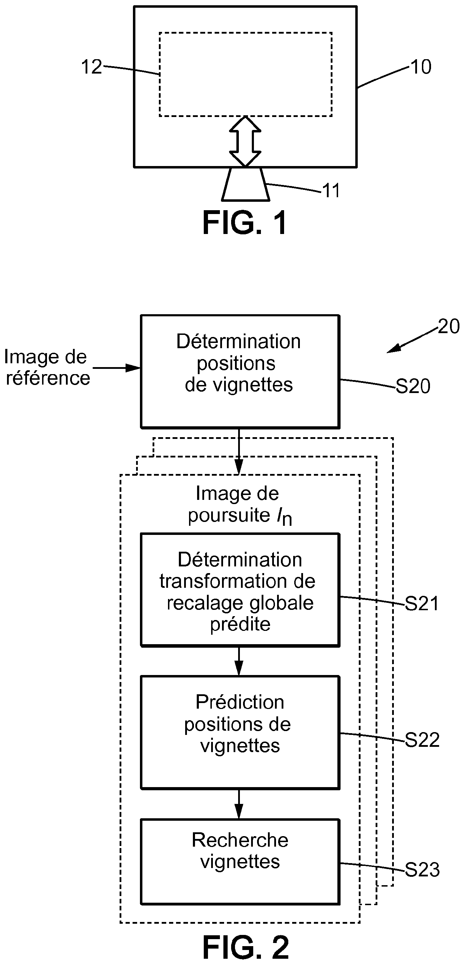

La figure 1 représente schématiquement un exemple de réalisation d'un engin 10 spatial ou aérien. Tel qu'illustré par la figure 1, l'engin 10 comporte le senseur de vision 11 et un dispositif de calcul 12.

Le senseur de vision 11 peut être de tout type adapté à acquérir des images à deux dimensions (2D) de la scène, par exemple une caméra optique, une caméra infrarouge, un radar imageur, etc. Les images se présentent sous la forme d'une matrice de pixels fournissant une information physique sur la zone de la scène placée dans le champ de vue dudit senseur de vision 11. Les images sont par exemple des matrices de $N_x \times N_y$ pixels, $N_x$ et $N_y$ étant par exemple chacun de l'ordre de quelques centaines à quelques dizaines de milliers de pixels. Les images sont acquises de manière récurrente par le senseur de vision 11, par exemple de manière périodique avec une fréquence qui est par exemple de l'ordre de quelques Hertz (Hz) à quelques centaines de Hz.

Il est à noter qu'un système de vision monoculaire (par opposition notamment à stéréoscopique), comprenant un seul senseur de vision 11, suffit pour la mise en oeuvre du procédé 20 de traitement. Dans la suite de la description, on se place dans le cas non limitatif où l'engin 10 spatial ou aérien embarque un seul senseur de vision 11 adapté à fournir des images 2D de la scène. Rien n'exclut cependant, suivant d'autres exemples, d'avoir un engin 10 embarquant plusieurs senseurs de vision 11 adaptés à fournir des images 2D de la scène et/ou embarquant au moins un senseur de vision adapté à fournir des images 3D de ladite scène.

Le dispositif de calcul 12 est configuré pour mettre en oeuvre tout ou partie des étapes du procédé 20 de traitement de la séquence d'images acquise par le senseur de vision 11. Dans l'exemple non limitatif illustré par la figure 1, le dispositif de calcul 12 est embarqué dans l'engin 10 spatial ou aérien. Il est cependant possible, dans d'autres exemples, d'avoir un dispositif de calcul 12 qui n'est pas embarqué dans l'engin 10 et qui est distant dudit engin 10. Le cas échéant, les images acquises par le senseur de vision sont transmises au dispositif de calcul 12 par tout type de moyen de communication adapté.

Le dispositif de calcul 12 comporte par exemple un ou plusieurs processeurs (CPU, DSP, GPU, FPGA, ASIC, etc.). Dans le cas de plusieurs processeurs, ceux-ci peuvent être intégrés dans un même équipement et/ou intégrés dans des équipements matériellement distincts. Le dispositif de calcul 12 comporte également une ou plusieurs mémoires (disque dur magnétique, mémoire électronique, disque optique, etc.) dans lesquelles est par exemple mémorisé un produit programme d'ordinateur, sous la forme d'un ensemble d'instructions de code de programme à exécuter par le ou les processeurs pour mettre en oeuvre les différentes étapes du procédé 20 de traitement.

La figure 2 représente schématiquement les principales étapes d'un procédé 20 de traitement d'une séquence d'images acquises par le senseur de vision 11 embarqué dans l'engin 10 spatial ou aérien, ladite séquence d'images représentant une scène vis-à-vis de laquelle l'engin 10 spatial ou aérien est susceptible de se déplacer.

Tel qu'indiqué ci-dessus, le procédé 20 de traitement vise à suivre des éléments de la scène d'une image à une autre (lesdits éléments étant généralement considérés comme immobiles par rapport à la scène), en poursuivant d'une image à une autre des vignettes représentant ces éléments. De manière générale, on entend par « vignette » (« patch » dans la littérature anglo-saxonne) un ensemble de pixels adjacents d'une image, comportant un nombre de pixels très inférieur au nombre total ($N_x \times N_y$) de pixels de l'image, par exemple de l'ordre de quelques dizaines de pixels à quelques centaines de pixels. Si la pose (position et orientation) du senseur de vision 11 par rapport à la scène varie au cours de l'acquisition de la séquence d'images, par exemple du fait d'un mouvement de l'engin 10 par rapport à ladite scène, alors les variations des positions des vignettes d'une image à une autre de la séquence permettent par exemple d'estimer le mouvement de l'engin 10 spatial ou aérien par rapport à la scène, au moins en partie. Par conséquent, la poursuite de vignettes dans une séquence d'images peut être utilisée dans le cas de systèmes de navigation basée vision, pour estimer le mouvement de l'engin 10 par rapport à la scène, éventuellement en combinaison avec des mesures de navigation fournies par des senseurs de navigation (récepteur GPS, accéléromètre, odomètre, gyroscope, etc.) embarqués dans l'engin 10.

Tel qu'illustré par la figure 2, le procédé 20 de traitement comporte une étape S20 de détermination, dans une image dite de référence (par exemple la première image de la séquence), de positions de vignettes. Afin de limiter la complexité liée à l'identification des vignettes et de leurs positions, celles-ci sont déterminées indépendamment d'un contenu de ladite image de référence. En d'autres termes, Il n'y a pas de traitement du contenu de l'image de référence pour détecter des vignettes caractéristiques présentant de bonnes propriétés pour la poursuite. Les positions des vignettes sont choisies de manière arbitraire dans l'image de référence.

Suivant un exemple de mise en oeuvre, les positions des vignettes sont prédéfinies, c'est-à-dire qu'elles sont connues a priori de manière déterministe. Par exemple, il peut s'agir de positions prédéfinies réparties spatialement de manière régulière dans l'image de référence.

Dans des modes préférés de mise en oeuvre, les positions des vignettes sont déterminées de manière aléatoire dans l'image de référence. Ainsi, les positions des vignettes sont choisies au hasard dans l'image de référence, et varient d'une image de référence à une autre. Les positions des vignettes ne sont donc en principe pas réparties spatialement de manière régulière dans l'image de référence.

Dans certains cas, il est possible, de manière optionnelle, de décomposer l'image de référence en une pluralité de sous-images disjointes, ayant de préférence une répartition régulière prédéterminée. Par exemple, toutes les sous-images ont les mêmes dimensions. L'image de référence correspond alors à la réunion des sous-images et les positions des vignettes sont de préférence déterminées de sorte que chaque sous-image de l'image de référence comporte au moins une vignette. De telles dispositions permettent d'assurer que les positions des vignettes sont réparties spatialement dans toute l'image de référence, même lorsque lesdites positions sont déterminées de manière aléatoire dans chaque sous-image. Cela permet donc d'éviter d'avoir des vignettes toutes regroupées dans une partie de l'image de référence. Il est à noter qu'il est possible d'éviter certaines parties de l'image de référence, par exemple les parties situées à proximité du bord de l'image de référence, qui représentent des éléments de la scène qui ont une plus grande probabilité de disparaître d'une image à une autre de la séquence, suivant le mouvement de l'engin 10. En d'autres termes, les positions des vignettes peuvent être déterminées en considérant toutes les sous-images de l'image de référence (chaque sous-image comportant au moins une vignette) ou en considérant seulement certaines desdites sous-images parmi toutes les sous-images composant l'image de référence.

Il est à noter qu'il est également possible, dans certains cas, de combiner des positions déterminées de manière déterministe et des positions déterminées de manière aléatoire pour les vignettes.

Chaque vignette correspond donc à un ensemble de pixels situé, dans l'image de référence, à une position ainsi déterminée indépendamment du contenu de l'image de référence. Par exemple, la position ainsi déterminée correspond à la position d'un pixel de référence de la vignette, par exemple le pixel situé au centre de ladite vignette, ou bien un pixel situé sur un bord de ladite vignette, par exemple un coin prédéterminé de ladite vignette.

Chaque position déterminée au cours de l'étape S20 détermine donc un ensemble de pixels formant une vignette, et les vignettes ainsi déterminées vont ensuite être poursuivies dans une pluralité d'images qui suivent l'image de référence dans la séquence, dites images de poursuite.

Dans certains modes de mise en oeuvre, il est possible de considérer, en plus des vignettes déterminées indépendamment du contenu de l'image, des vignettes caractéristiques déterminées en analysant le contenu de l'image de référence présentant de bonnes propriétés pour la poursuite. Le cas échéant, le nombre de vignettes caractéristiques est de préférence inférieur au nombre de vignettes, afin de limiter la complexité de calcul pour la détection des vignettes caractéristiques. Dans la suite de la description, on considère de manière non limitative que seules des vignettes (déterminées indépendamment du contenu de l'image de référence) sont déterminées et poursuivies d'une image à une autre.

Tel qu'indiqué ci-dessus, les vignettes, déterminées pour l'image de référence, sont ensuite poursuivies dans une pluralité d'images de poursuite acquises après ladite image de référence. Tel qu'illustré par la figure 2, la poursuite des vignettes comporte une pluralité d'étapes qui sont répétées pour chaque image de poursuite. Plus particulièrement, pour l'image de poursuite dans laquelle la poursuite est effectuée, dite image de poursuite traitée, la poursuite des vignettes comporte :

- une étape S21 de détermination d'une transformation de recalage globale prédite entre l'image de référence et l'image de poursuite traitée,
- une étape S22 prédiction de positions dans l'image de poursuite traitée pour les vignettes, en fonction des positions dans l'image de référence desdites vignettes et de la transformation de recalage globale prédite pour l'image de poursuite traitée,
- une étape S23 de recherche des vignettes dans l'image de poursuite traitée, à partir des positions prédites pour les vignettes.

L'étape S21 vise à déterminer une transformation de recalage globale prédite entre l'image de poursuite traitée et l'image de référence, permettant de ramener l'image de référence dans une géométrie d'acquisition proche de la géométrie d'acquisition de l'image de poursuite traitée.

La transformation de recalage est dite « globale » pour préciser qu'elle correspond à la transformation de recalage par rapport à l'image de référence.

C'est donc la même image de référence qui est considérée pour la poursuite dans la pluralité d'images de poursuite. La transformation de recalage globale est dite « prédite » pour l'image de poursuite traitée car elle est déterminée indépendamment du contenu de ladite image de poursuite traitée, avant d'avoir retrouvé dans l'image de poursuite traitée les éléments de la scène représentés par les vignettes. La transformation de recalage globale prédite est précisément mise en oeuvre pour faciliter la recherche de ces éléments de la scène dans l'image de poursuite traitée.

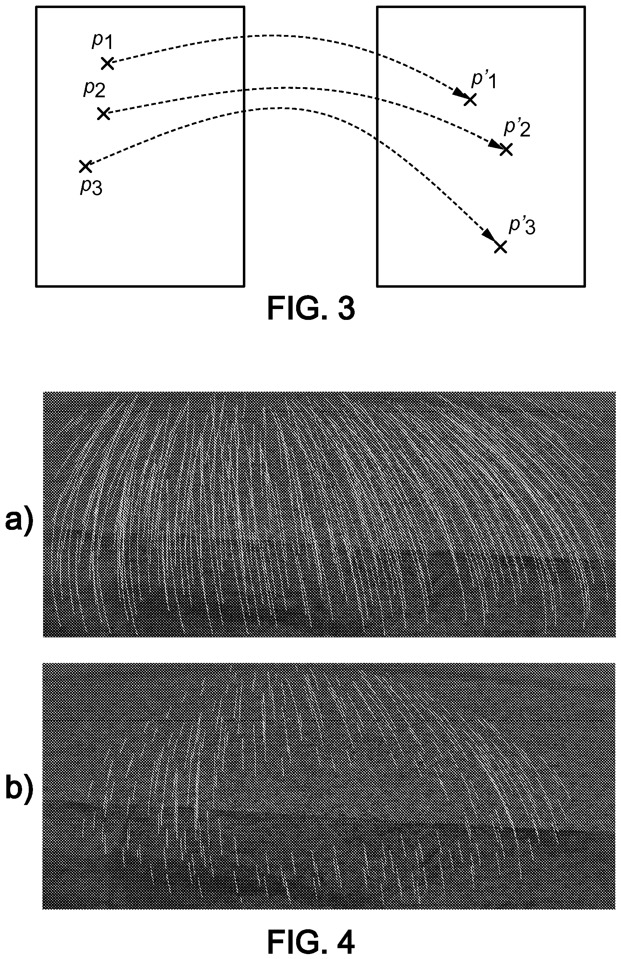

Pour chacun de tout ou partie des pixels de l'image de référence, la transformation de recalage globale prédite permet de prédire le pixel de l'image de poursuite traitée représentant théoriquement le même élément de la scène. En effet, les positions des pixels représentant un même élément de la scène peuvent varier d'une image à une autre du fait notamment du changement de pose du senseur de vision 11 par rapport à la scène. La figure 3 représente schématiquement deux images successives et, dans ces images, des pixels représentant les mêmes éléments de la scène. Plus particulièrement, le pixel $p_1$ et le pixel $p'_1$ représentent le même élément de la scène, le pixel $p_2$ et le pixel $p'_2$ représentent le même élément de la scène, et le pixel $p_3$ et le pixel $p'_3$ représentent le même élément de la scène. Toutefois, la position du pixel $p_1$ dans l'image de gauche est différente de la position du pixel $p'_1$ dans l'image de droite (de même pour les pixels $p_2$ et $p'_2$, et pour les pixels $p_3$ et $p'_3$). La transformation de recalage globale prédite vise à essayer de prédire, à partir de la position d'un pixel dans l'image de référence, la position du pixel représentant le même élément de la scène dans l'image de poursuite traitée.

De préférence, la transformation de recalage globale prédite comporte au moins un modèle de mouvement introduit par un mouvement relatif entre le senseur de vision 11 et la scène. Le modèle de mouvement modélise les déplacements de pixels d'une image à une autre qui sont dus à un changement de la pose du senseur de vision 11 par rapport à ladite scène. Afin de limiter la complexité du modèle de mouvement, celui-ci peut modéliser le mouvement de manière approximative, en faisant des hypothèses simplificatrices notamment sur la géométrie de la scène.

Par exemple, le modèle de mouvement correspond, dans des modes préférés de mise en oeuvre, à une homographie. De manière connue en soi, une homographie modélise le mouvement en supposant que les éléments de la scène représentés par les vignettes sont situés dans un même plan, c'est-à-dire en supposant que la scène est globalement une surface plane. Une telle homographie peut être modélisée de manière simple et s'avère en outre suffisante dans de nombreux cas.

Dans d'autres exemples, la géométrie de la scène peut être modélisée de manière différente d'une surface plane. Par exemple, dans le cas d'une navigation lointaine par rapport à un corps céleste, la scène peut être modélisée par un autre type de surface, par exemple sous la forme d'une sphère. Il est également possible de faire intervenir un modèle 3D plus précis de la scène, qui peut être connu a priori ou bien estimé, par exemple au moyen d'algorithmes de cartographie et localisation simultanées (« Simultaneous Localization and Mapping » ou SLAM dans la littérature anglo-saxonne).

D'autres phénomènes influencent les positions des pixels représentant un même élément de la scène d'une image à une autre. Notamment, le senseur de vision 11 comporte typiquement une optique qui est susceptible d'introduire des déformations géométriques qui dépendent d'un angle de visée entre le senseur de vision 11 et un élément de la scène. Dans des modes préférés de mise en oeuvre, la transformation de recalage globale prédite comporte en outre un modèle de distorsion optique introduite par le senseur de vision. La figure 4 représente schématiquement les trajectoires, dans le plan focal du senseur de vision 11, des positions successives de plusieurs vignettes qui ont pu être poursuivies. La partie a) représente le cas où le modèle de distorsion optique a été pris en compte et la partie b) représente le cas où le modèle de distorsion optique n'a pas été pris en compte. Comme illustré par la figure 4, la prise en compte du modèle de distorsion optique permet d'améliorer la poursuite des vignettes, et notamment de poursuivre un plus grand nombre de vignettes, en particulier dans la partie centrale du plan focal et au niveau du bord dudit plan focal.

Si on considère $N + 1$ images $I_k$, a $\leq k \leq N$, parmi lesquelles l'image de référence correspond à l'image $I_0$ et les images de poursuite correspondent aux images $I_n$, $1 \leq n \leq N$, alors on désigne par $\tilde{T}_n^G$ la transformation de recalage globale prédite pour l'image de poursuite traitée $I_n$. Le modèle de mouvement, qui prédit le déplacement des pixels, induit par le mouvement relatif entre le senseur de vision 11 et la scène, entre l'image de poursuite traitée $I_n$ et l'image de référence $I_0$, est par exemple désigné par $M_n^G$. Dans certains modes de mise en oeuvre, la transformation de recalage globale prédite $\tilde{T}_n^G$ se résume au modèle de mouvement $M_n^G$ entre l'image de poursuite traitée $I_n$ et l'image de référence $I_0$, et $\tilde{T}_n^G = M_n^G$. Dans certains modes de mise en oeuvre, la transformation de recalage globale prédite $\tilde{T}_n^G$ intègre également un modèle de distorsion optique $D_{OPT}$. Le cas échéant, la transformation de recalage globale prédite $\tilde{T}_n^G$ est par exemple donnée par l'expression

$$\tilde{T}_n^G = D_{OPT} \circ M_n^G \circ [D_{OPT}]^{-1}.$$

Au cours de l'étape étape S22, les positions des vignettes dans l'image de poursuite traitée $I_n$ sont prédites au moyen de la transformation de recalage globale prédite $\tilde{T}_n^G$, qui est appliquée aux positions desdites vignettes dans l'image de référence $I_0$.

Ces positions prédites des vignettes dans l'image de poursuite traitée $I_n$, même approximatives, permettent de faciliter la recherche des vignettes au cours de l'étape S23.

De manière générale, l'étape S23 de recherche des vignettes dans l'image de poursuite traitée peut mettre en oeuvre tout type d'algorithme de poursuite connu de la personne du métier, et le choix d'un type particulier d'algorithme de poursuite ne correspond qu'à un exemple non limitatif de mise en oeuvre. Dans des modes préférés de mise en oeuvre, l'algorithme de poursuite est de type Kanade-Lucas-Tomasi, KLT.

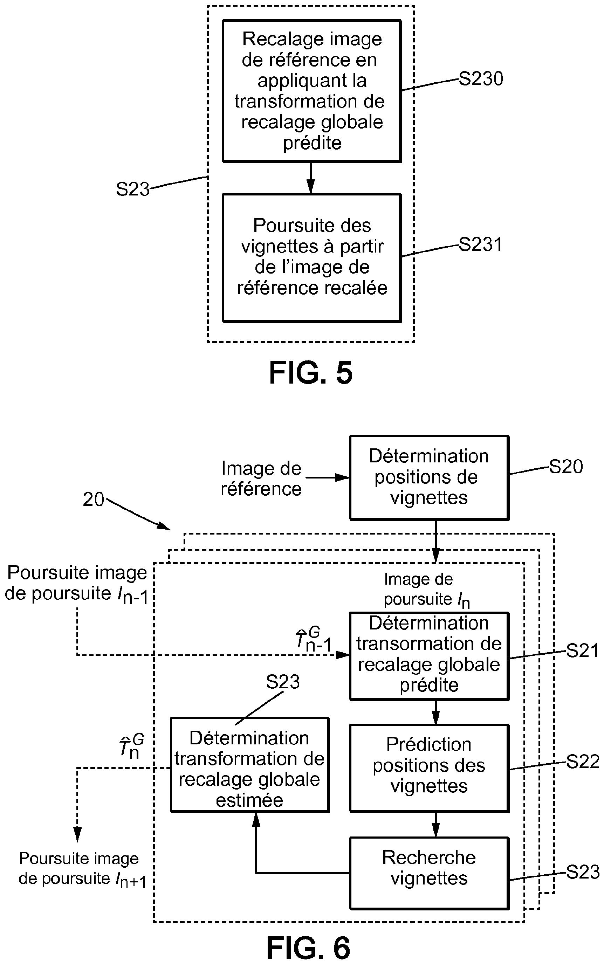

La figure 5 représente schématiquement les principales étapes d'un mode préféré de mise en oeuvre de l'étape S23 de recherche des vignettes dans l'image de poursuite traitée. Tel qu'il par la figure 5, la recherche des vignettes dans l'image de poursuite traitée comporte :

-   une étape S230 de recalage de l'image de référence en appliquant à ladite image de référence la transformation de recalage globale prédite pour l'image de poursuite traitée,
-   une étape S231 de poursuite des vignettes dans l'image de poursuite traitée en utilisant l'image de référence recalée.

Il est à noter que l'étape S231 de poursuite correspond à la mise en oeuvre d'un algorithme de poursuite, tel que l'algorithme de poursuite de type KLT. Dans le cas présent, c'est toutefois l'image de référence recalée (ramenée au plus près de la géométrie d'acquisition de l'image de poursuite traitée) qui est prise en compte par l'algorithme de poursuite utilisé.

En appliquant la transformation de recalage globale prédite à l'image de référence (c'est-à-dire en la recalant avec l'image de poursuite traitée), alors l'image de référence est ramenée au plus près de la géométrie d'acquisition de l'image de poursuite traitée. L'apparence d'un élément de la scène dans une image varie selon le point de vue d'acquisition de cette image. Ce recalage permet donc d'obtenir des vignettes qui, en principe, ressemblent davantage aux vignettes représentant les mêmes éléments de la scène dans l'image de poursuite traitée. Dans cet exemple, la transformation de recalage globale prédite est donc utilisée à la fois pour prédire les positions des vignettes dans l'image de poursuite traitée (au cours de l'étape S22) et pour ramener tout ou partie de l'image de référence au plus près de la géométrie d'acquisition de l'image de poursuite traitée (au cours de l'étape S230).

De plus, les algorithmes de poursuite (y compris l'algorithme de poursuite de type KLT) recherchent généralement des vignettes centrées sur un élément caractéristique. Dans le cas présent, une vignette ne présente pas a priori de bonnes propriétés pour la poursuite, de sorte que l'algorithme de poursuite va avoir tendance à poursuivre la partie la plus caractéristique de la vignette, qui ne sera pas nécessairement au centre de la vignette. Sans traitement particulier, ce décalage par rapport au centre de la vignette introduirait une erreur sur l'estimation de la position de la vignette dans les images de poursuite de l'ordre des dimensions de la vignette. Cette erreur est grandement réduite grâce au recalage de l'image de référence. De telles dispositions permettent donc d'améliorer la précision des positions estimées des vignettes retrouvées dans l'image de poursuite.

Il est à noter que la recherche des vignettes dans une image de poursuite traitée s'appuie sur des positions qui sont prédites, pour ces vignettes, au moyen de la transformation de recalage globale prédite. Une vignette (recalée au moyen de la transformation de recalage globale prédite) sera en général retrouvée dans l'image de poursuite traitée à une position qui peut différer de la position prédite pour cette vignette. La position à laquelle une vignette est retrouvée dans l'image de poursuite traitée est parfois désignée ci-après par « position estimée » de ladite vignette (par opposition à « position prédite »).

Afin de réduire la complexité de calcul liée au recalage de l'image de référence avec l'image de poursuite traitée, il est possible, dans des modes préférés de mise en oeuvre, de ne ramener que les vignettes de l'image de référence dans une géométrie d'acquisition proche de la géométrie d'acquisition de l'image de poursuite traitée. Ainsi, plutôt que d'essayer de recaler l'ensemble des pixels de l'image de référence, seuls des pixels des vignettes sont recalés, ce qui permet de réduire grandement le nombre de pixels à recaler et donc la complexité de calcul associée.

Les vignettes recalées sont alors comparées à des vignettes respectives de l'image de poursuite traitée, chaque vignette de l'image de poursuite traitée étant positionnée au niveau de la position prédite de la vignette recalée à laquelle ladite vignette de l'image de poursuite traitée est comparée. Par exemple, il est possible de sélectionner, dans l'image de poursuite traitée, un groupe de pixels centré sur la position prédite pour une vignette. Ce groupe de pixels correspond à la vignette de l'image de poursuite traitée qui doit être comparée à la vignette recalée. Par exemple, pour chaque pixel de ce groupe de pixels, il est possible d'identifier le pixel de la vignette qui est censé représenter le même élément de la scène, par exemple en appliquant à la position de ce pixel la transformation de recalage globale prédite inverse $[\tilde{T}_n^G]^{-1}$. Il est ainsi possible d'identifier, dans l'image de référence, les pixels de la vignette qui vont être projetés dans l'image de poursuite traitée sur le groupe de pixels centré sur la position prédite de cette vignette. Il est possible de ne recaler que ces pixels de la vignette pour former une vignette recalée ayant la même forme que le groupe de pixels dans l'image de poursuite traitée, et dont les valeurs des pixels correspondent respectivement aux valeurs des pixels identifiés dans l'image de référence au moyen de la transformation de recalage globale prédite inverse $[\tilde{T}_n^G]^{-1}$.

Afin de réduire davantage la complexité de calcul associée au recalage de pixels d'une vignette, il est possible d'utiliser une approximation locale de la transformation de recalage globale prédite obtenue par un développement limité de ladite transformation de recalage globale prédite localement à la position de la vignette associée. Il est à noter que l'approximation est dite « locale » car elle dépend de la position considérée dans une image et n'est a priori valable que dans un voisinage de cette position.

Par exemple, dans le cas où la transformation de recalage globale prédite comporte un modèle de mouvement correspondant à une homographie, une telle homographie peut s'avérer difficile à calculer car elle implique des divisions. Toutefois, comme les vignettes à recaler sont typiquement de faibles dimensions (par exemple de l'ordre de $15 \times 15$ pixels), l'homographie peut être approchée par un développement limité, par exemple au premier ordre, localement à la position de la vignette à recaler. En d'autres termes, une approximation locale est déterminée pour chaque vignette à recaler. Par exemple, si on considère une approximation locale au voisinage d'un pixel à la position $(x_0, y_0)$, alors il est possible de déterminer une approximation locale $\check{T}_n^G[x_0, y_0]$ de la transformation de recalage globale prédite $\tilde{T}_n^G$ au voisinage de $(x_0, y_0)$, par un développement limité par exemple au premier ordre, de sorte que $T_n^G(x, y) \approx \check{T}_n^G[x_0, y_0](x, y)$, si $(x, y)$ est proche de $(x_0, y_0)$.

Par exemple, il est possible d'utiliser la transformation de recalage globale prédite $\tilde{T}_n^G$ pour prédire les positions des vignettes dans l'image de poursuite traitée. Pour une position prédite $(x_0, y_0)$ d'une vignette dans l'image de poursuite traitée, il est possible de déterminer une approximation locale $\check{T}_n^G[x_0, y_0]^{-1}$ de la transformation de recalage globale prédite inverse $[\tilde{T}_n^G]^{-1}$ au voisinage de $(x_0, y_0)$. L'approximation locale $\check{T}_n^G[x_0, y_0]^{-1}$ peut alors être utilisée pour identifier, pour chaque pixel du groupe de pixels positionné en $(x_0, y_0)$, le pixel de la vignette qui est censé représenter le même élément de la scène, en appliquant ladite approximation locale $\check{T}_n^G[x_0, y_0]^{-1}$ à la position de ce pixel dans l'image de poursuite traitée, comme indiqué ci-dessus.

La figure 6 représente schématiquement les principales étapes d'un mode préféré de mise en oeuvre du procédé 20 de traitement pour la détermination de la transformation de recalage globale prédite $\tilde{T}_n^G$.

Tel qu'illustré par la figure 6, la poursuite des vignettes dans une image de poursuite traitée comporte également une étape S24 de détermination d'une transformation de recalage globale estimée $\hat{T}_n^G$ entre l'image de référence $I_0$ et l'image de poursuite traitée $I_n$, en fonction des positions (estimées) des vignettes retrouvées (au cours de l'étape S23 de recherche) dans l'image de poursuite traitée $I_n$ et en fonction des positions de ces vignettes dans l'image de référence $I_0$. Cette transformation de recalage globale estimée $\hat{T}_n^G$ sera utilisée pour déterminer la transformation de recalage globale prédite $\tilde{T}_{n+1}^G$ pour l'image de poursuite $I_{n+1}$ suivante (au moins). L'étape S21 de détermination de la transformation de recalage globale prédite $\tilde{T}_n^G$ pour l'image de poursuite traitée $I_n$ utilise la transformation de recalage globale estimée $\hat{T}_{n-1}^G$ déterminée pour l'image de poursuite $I_{n-1}$ précédente (au moins).

Avantageusement, la transformation de recalage globale estimée $\hat{T}_n^G$ entre l'image de référence $I_0$ et l'image de poursuite traitée $I_n$ est déterminée au moyen d'un estimateur robuste. Du fait de l'utilisation d'un estimateur robuste, la contribution des mesures aberrantes (« outliers » dans la littérature anglo-saxonne) à l'estimation est réduite, et les mesures aberrantes peuvent en outre être identifiées. Dans le cas présent, la transformation de recalage globale estimée $\hat{T}_n^G$ est déterminée en fonction des positions des vignettes dans l'image de référence $I_0$ et des positions (estimées) des vignettes retrouvées dans l'image de poursuite traitée $I_n$. Par conséquent, les mesures aberrantes vont correspondre principalement à des vignettes qui n'ont pas été correctement poursuivies, c'est-à-dire principalement des vignettes présentant une qualité insuffisante pour la poursuite. Ainsi, bien qu'aucune vérification de la qualité des vignettes ne soit effectuée lorsque leurs positions sont initialement déterminées de manière arbitraire, l'estimateur robuste utilisé pour déterminer la transformation de recalage globale estimée $\hat{T}_n^G$ permet intrinsèquement d'écarter (et éventuellement d'identifier), au stade de la poursuite, les vignettes qui présentent une qualité insuffisante pour la poursuite. De manière connue en soi, l'estimateur robuste peut attribuer, à chaque vignette retrouvée dans une image de poursuite, un indicateur de compatibilité avec la transformation de recalage globale estimée, et il est possible de conserver en tant que vignettes retrouvées uniquement des vignettes retrouvées qui sont compatibles avec la transformation de recalage globale estimée d'après leurs indicateurs de compatibilité. Suivant un exemple non limitatif, il est possible d'utiliser un seuil prédéterminé sur une distance entre la position estimée d'une vignette et la position prédite obtenue en appliquant la transformation de recalage globale estimée $\hat{T}_n^G$ à la position de cette vignette dans l'image de référence. Si cette distance est supérieure au seuil prédéterminé, alors l'indicateur de compatibilité pour cette vignette est par exemple mis à 0, signifiant que cette vignette n'est pas compatible avec la transformation de recalage globale estimée. Dans le cas contraire (distance égale ou inférieure au seuil prédéterminé), alors l'indicateur de compatibilité est par exemple mis à 1, signifiant que cette vignette est bien compatible avec la transformation de recalage globale estimée. Le seuil prédéterminé est par exemple choisi pour tenir compte des différentes sources d'erreurs qui influencent la distance calculée indépendamment de la compatibilité avec la transformation de recalage globale estimée, comme le bruit de mesure et/ou l'erreur de modélisation de la géométrie de la scène. Par exemple, le seuil prédéterminé peut être de l'ordre de 5 à 25 pixels, pour conserver une marge vis-à-vis de ces sources d'erreurs.

En outre, un modèle de mouvement $M_n^G$ simple tel qu'une homographie peut être estimée à partir des positions estimées de quatre (4) vignettes retrouvées dans l'image de poursuite traitée $I_n$. En pratique, et grâce notamment au fait que les positions des vignettes dans l'image de poursuite traitée $I_n$ sont prédites, le nombre de vignettes retrouvées sera très supérieur à quatre, permettant à l'estimateur robuste de déterminer la transformation de recalage globale estimée $\hat{T}_n^G$ modélisant au mieux le mouvement des pixels entre l'image de référence $I_0$ et l'image de poursuite traitée $I_n$.

De manière générale, la présente divulgation peut utiliser tout type d'estimateur robuste connu de la personne du métier, et le choix d'un type particulier d'estimateur robuste ne correspond qu'à un exemple non limitatif de mise en oeuvre de la présente divulgation. Dans des modes préférés de mise en oeuvre, l'estimateur robuste est de type RANSAC.

Dans l'exemple illustré par la figure 6, la transformation de recalage globale prédite $\tilde{T}_n^G$ pour l'image de poursuite traitée $I_n$ utilise la transformation de recalage globale estimée $\hat{T}_{n-1}^G$ déterminée pour l'image de poursuite $I_{n-1}$ précédente (au moins).

Suivant un premier exemple, la transformation de recalage globale prédite $\tilde{T}_n^G$ pour l'image de poursuite

traitée $I_n$ correspond à la transformation de recalage globale estimée $\hat{T}_{n-1}^G$, c'est-à-dire $\tilde{T}_n^G = \hat{T}_{n-1}^G$. En d'autres termes, il est supposé que les pixels se déplacent peu d'image à une suivante.

Suivant un autre exemple, il est possible d'estimer en outre une transformation de recalage dite locale entre les deux images qui précèdent l'image de poursuite traitée $I_n$ dans la séquence d'images, c'est-à-dire entre les images $I_{n-1}$ et $I_{n-2}$, cette transformation de recalage locale estimée étant désignée par $\Delta\hat{T}_{n-1}$. Cette transformation de recalage est dite « locale » car il s'agit d'une transformation de recalage entre deux images consécutives de la séquence, indépendamment de savoir si l'une de ces images est l'image de référence $I_0$ (par opposition à « globale » qui est nécessairement par rapport à l'image de référence $I_0$). Ensuite, la transformation de recalage globale prédite $\tilde{T}_n^G$ est par exemple déterminée en combinant la transformation de recalage globale estimée $\hat{T}_{n-1}^G$ (pour l'image précédente) et la transformation de recalage locale estimée $\Delta\hat{T}_{n-1}$ (pour l'image précédente), par exemple selon l'expression :

$$\tilde{T}_n^G = \Delta\hat{T}_{n-1} \circ \hat{T}_{n-1}^G$$

Ainsi, la transformation de recalage locale estimée $\Delta\hat{T}_{n-1}$ pour l'image $I_{n-1}$ précédente est utilisée comme prédiction de la transformation de recalage locale entre l'image $I_{n-1}$ précédente et l'image de poursuite traitée $I_n$. La transformation de recalage globale prédite $\tilde{T}_n^G$ anticipe dans ce cas le mouvement des pixels dans l'image de poursuite traitée $I_n$ par rapport à l'image $I_{n-1}$ précédente. Par exemple, la transformation de recalage locale estimée $\Delta\hat{T}_{n-1}$ est déterminée en fonction des transformations de recalage globales estimées $\hat{T}_{n-1}^G$ et $\hat{T}_{n-2}^G$ des images $I_{n-1}$ et $I_{n-2}$. Par exemple, en particulier lorsque le modèle de mouvement considéré correspond à une homographie, la transformation de recalage locale estimée $\Delta\hat{T}_{n-1}$ peut être déterminée selon l'expression suivante :

$$\Delta\hat{T}_{n-1} = \hat{T}_{n-1}^G \circ \left[\hat{T}_{n-2}^G\right]^{-1}$$

Par exemple, il est possible de considérer que la transformation de recalage globale prédite $\tilde{T}_1^G$ pour l'image de poursuite $I_1$ (acquise immédiatement après l'image de référence $I_0$) correspond à l'identité (c'est-à-dire aucun mouvement), au moins pour le modèle de mouvement $M_1^G$, c'est-à-dire $M_1^G = Id$. Dans le cas où une transformation de recalage locale estimée est utilisée, alors la transformation de recalage locale estimée $\Delta\hat{T}_1$ pour l'image de poursuite $I_1$ correspond directement à la transformation de recalage globale estimée $\hat{T}_1^G$ pour l'image de poursuite $I_1$, et $\tilde{T}_2^G = \Delta\hat{T}_1 \circ \hat{T}_1^G = \hat{T}_1^G \circ \hat{T}_1^G$.

Tel qu'indiqué ci-dessus, la même image de référence est utilisée pour rechercher les vignettes dans une pluralité d'images de poursuite. Toutefois, il peut parfois s'avérer nécessaire de sélectionner une nouvelle image de référence, comme décrit ci-après.

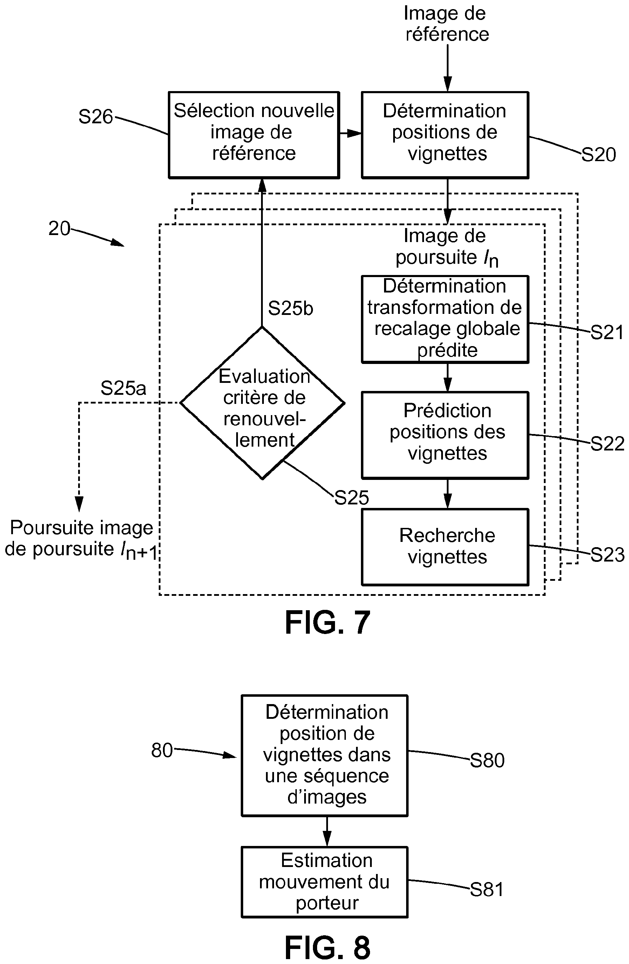

La figure 7 représente schématiquement les principales étapes d'un exemple de mise en oeuvre du procédé 20 de traitement. Outre les étapes décrites en référence à la figure 2, le procédé 20 de traitement comporte une étape S25 d'évaluation d'un critère prédéterminé de renouvellement d'image de référence. Dans l'exemple illustré par la figure 7, l'étape S25 d'évaluation est exécutée pour chaque image de poursuite, mais il est également possible d'évaluer le critère de renouvellement d'image de référence indépendamment des images de poursuite et/ou à une fréquence / récurrence plus faible.

Tel qu'illustré par la figure 7, lorsque le critère de renouvellement d'image de référence n'est pas vérifié (référence S25a sur la figure 7), la même image de référence est conservée pour l'image de poursuite suivante.

Si le critère de renouvellement d'image de référence est vérifié (référence S25b sur la figure 7), alors le procédé 20 de traitement comporte une étape S26 de sélection d'une nouvelle image de référence. Par exemple, la nouvelle image de référence correspond à l'image de poursuite traitée, ou bien à l'image suivante dans la séquence d'images acquise par le senseur de vision 11 de l'engin 10 spatial ou aérien.

L'étape S20 de détermination de positions de vignettes est alors exécutée pour la nouvelle image de référence, et c'est cette nouvelle image de référence qui est utilisée pour rechercher les vignettes dans une pluralité d'images suivantes de la séquence d'images. Dans des modes préférés de mise en oeuvre il est possible de conserver, en tant que vignettes de la nouvelle image de référence, des vignettes de l'image de référence précédente qui ont pu être poursuivies jusqu'à la nouvelle image de référence. En effet, si ces vignettes de l'image de référence précédente ont pu être poursuivies jusqu'à la nouvelle image de référence, c'est qu'elles présentent probablement de bonnes propriétés pour la poursuite. De préférence, ces vignettes sont toutefois complétées par d'autres vignettes dont les positions sont déterminées dans ladite nouvelle image de référence indépendamment de son contenu, comme décrit précédemment. En outre, dans un contexte de navigation basée vision, les positions de vignettes poursuivies sont typiquement fournies à un filtre de navigation, et il est préférable vis-à-vis de ce filtre de navigation de ne pas réinitialiser toutes les vignettes.

De manière générale, la présente divulgation peut mettre en oeuvre différents types de critères de renouvellement d'image de référence, et le choix d'un ou de plusieurs types particuliers ne correspond qu'à un exemple non limitatif de mise en oeuvre de la présente divulgation.

Suivant un premier exemple, le critère de renouvellement d'image de référence peut être considéré comme vérifié lorsque l'image de référence a été utilisée pour un nombre prédéterminé d'images de poursuite. Par exemple, lorsque l'image de poursuite $I_N$ est atteinte, le critère de renouvellement d'image de référence peut être considéré comme vérifié. Un tel critère de renouvellement d'image de référence est donc évalué indépendamment du contenu des images de poursuite.

Alternativement ou en complément, le critère de renouvellement d'image de référence peut être considéré comme vérifié lorsqu'une proportion de vignettes pouvant être poursuivies dans l'image de poursuite suivante est inférieure à un seuil prédéterminé. En effet, du fait que les vignettes ne présentent pas nécessairement de bonnes propriétés pour la poursuite, mais également du simple fait du mouvement du senseur de vision 11 par rapport à la scène, le nombre de vignettes pouvant être poursuivies va tendre à diminuer au fil des images de poursuite. Il peut donc s'avérer intéressant de renouveler l'image de référence lorsque la proportion de vignettes pouvant être poursuivies risque de devenir trop faible.

On décrit à présent un exemple non limitatif de détermination de la proportion de vignettes pouvant être poursuivies dans l'image de poursuite suivante.

Tout d'abord, il est à noter que la transformation de recalage globale estimée $\widehat{T}_n^G$ pour l'image de poursuite traitée $I_n$ peut être utilisée pour déterminer une proportion de vignettes qui correspondent à des éléments de la scène qui ne sont plus visibles dans l'image de poursuite traitée $I_n$, et donc pour déterminer une proportion de vignettes qui correspondent à des éléments de la scène qui sont toujours visibles dans l'image de poursuite traitée $I_n$. La proportion de vignettes correspondant à des éléments de la scène qui sont toujours visibles dans l'image de poursuite traitée $I_n$ est représentative du nombre maximal de vignettes pouvant être retrouvées dans l'image de poursuite traitée $I_n$. Le nombre de vignettes qui ont pu être effectivement retrouvées dans l'image de poursuite traitée $I_n$ peut alors être comparé à ce nombre maximal pour déterminer un taux de succès (typiquement égal au rapport entre le nombre de vignettes retrouvées et le nombre maximal de vignettes pouvant être retrouvées).

Ensuite, la transformation de recalage globale prédite $\widetilde{T}_{n+1}^G$ pour l'image de poursuite suivante $I_{n+1}$ peut être utilisée pour déterminer une proportion de vignettes qui correspondent à des éléments de la scène qui devraient toujours être visibles dans l'image de poursuite suivante $I_{n+1}$. La proportion de vignettes pouvant être poursuivies dans l'image de poursuite suivante $I_{n+1}$ correspond par exemple au produit entre d'une part le taux de succès calculé précédemment et, d'autre part, la proportion de vignettes correspondant à des éléments de la scène qui devraient toujours être visibles dans l'image de poursuite suivante $I_{n+1}$. La proportion de vignettes pouvant être poursuivies dans l'image de poursuite suivante $I_{n+1}$ ainsi calculée peut alors être comparée au seuil prédéterminé pour évaluer si le critère de renouvellement d'image de référence est vérifié. Il est également possible, suivant d'autres exemples, de ne pas considérer le taux de succès dans le calcul de la proportion de vignettes pouvant être poursuivies dans l'image de poursuite suivante.

Alternativement ou en complément, le critère de renouvellement d'image de référence peut être considéré comme vérifié lorsque les vignettes pouvant être poursuivies dans l'image de poursuite suivante présentent une répartition spatiale insuffisante dans ladite image de poursuite suivante. Par exemple, il est possible de considérer une décomposition de l'image de poursuite suivante en une pluralité de sous-images, afin de vérifier qu'au moins une proportion prédéterminée de sous-images comprend au moins une vignette. Dans un tel cas, la répartition spatiale dans l'image de poursuite suivante peut être considérée comme insuffisante lorsque la proportion de sous-images comportant au moins une vignette est inférieure à un seuil prédéterminé. Un exemple de décomposition en sous-images est par exemple un quadrillage prédéterminé de l'image de poursuite.

Dans certains modes de mise en oeuvre, il est également possible de réaliser un filtrage spatial des vignettes poursuivies, afin d'éviter de poursuivre des vignettes trop proches. Ainsi, lorsque deux vignettes poursuivies ont des positions estimées proches (c'est-à-dire ayant une distance entre elles inférieure à un seuil prédéterminé), il est avantageux de ne conserver qu'une seule de ces vignettes pour la suite de la poursuite. Un tel filtrage spatial, lorsqu'il est mis en oeuvre, peut influencer la proportion de vignettes pouvant être poursuivies dans l'image de poursuite suivante (et donc l'évaluation du critère de renouvellement d'image de référence) puisque certaines vignettes peuvent être écartées par ce filtrage spatial. Un tel filtrage spatial peut également être mis en oeuvre après avoir déterminé les positions de vignettes pour une nouvelle image de référence, en particulier lorsque des vignettes de l'image de référence précédente sont conservées, afin d'éviter de poursuivre des vignettes trop proches les unes des autres.

Tel qu'indiqué précédemment, la procédé 20 de traitement trouve une application particulièrement avantageuse, bien que nullement limitative, dans le cas de systèmes de navigation basée vision (« Vision-Based Navigation » ou VBN dans la littérature anglo-saxonne), pour estimer le mouvement par rapport à la scène d'un engin portant le senseur de vision.

La figure 8 représente schématiquement les principales étapes d'un procédé 60 d'estimation, par le dispositif de calcul 12, du mouvement de l'engin 10 aérien ou spatial par rapport à la scène.

Tel qu'illustré par la figure 8, le procédé 60 d'estimation comporte une étape S60 de détermination de positions de vignettes poursuivies dans une séquence d'images acquise par le senseur de vision 11 embarqué dans l'engin 10, qui met en oeuvre le procédé 20 de traitement décrit ci-avant. Ensuite, le procédé 60 d'estimation comporte une étape S61 d'estimation du mouvement du mouvement de l'engin 10 spatial ou aérien en fonction desdites positions desdites vignettes poursuivies dans la séquence d'images. Tel qu'indiqué précédemment, l'étape S61 d'estimation peut également prendre en entrée des mesures effectuées par un ou des senseurs de navigation embarqués dans l'engin 10 spatial ou aérien (voir par exemple les demandes de brevet EP 2428934 A1 et EP 3227860 A1).

**Revendications**

1. Procédé (20) de traitement d'une séquence d'images d'une scène, lesdites images de la séquence étant acquises successivement par un senseur de vision (11), ledit procédé étant **caractérisé en ce qu'**il comporte au moins :

   - une détermination (S20), dans une image dite de référence, de positions de vignettes, ladite détermination des positions des vignettes dans l'image de référence étant réalisée indépendamment du contenu de ladite image de référence, et
   - une poursuite desdites vignettes , à partir des positions des vignettes dans l'image de référence, dans chacune d'une pluralité d'images dites de poursuite acquises après ladite image de référence, la poursuite des vignettes comportant, pour chaque image de poursuite traitée :

      - une détermination (S21) d'une transformation de recalage globale prédite entre l'image de référence et l'image de poursuite traitée,
      - une prédiction (S22) des positions des vignettes, dans l'image de poursuite traitée, en fonction des positions des vignettes dans l'image de référence et de la transformation de recalage globale prédite pour l'image de poursuite traitée,
      - une recherche (S23) des vignettes dans l'image de poursuite traitée, à partir des positions prédites des les vignettes.

2. Procédé (20) selon la revendication 1, dans lequel la transformation de recalage globale prédite comporte un modèle de mouvement introduit par un mouvement relatif entre le senseur de vision et la scène.

3. Procédé (20) selon la revendication 2, dans lequel le modèle de mouvement correspond à une homographie.

4. Procédé (20) selon la revendication 2 ou 3, dans lequel la transformation de recalage globale prédite comporte un modèle de distorsion optique introduite par le senseur de vision.

5. Procédé (20) selon l'une quelconque des revendications précédentes, dans lequel, pour les images de poursuite à partir de la deuxième image de poursuite suivant l'image de référence, la transformation de recalage globale prédite pour l'image de poursuite traitée est déterminée en fonction d'une transformation de recalage globale estimée entre l'image de référence et une image qui précède ladite image de poursuite traitée dans la séquence d'images, la transformation de recalage globale estimée étant déterminée, au moyen d'un estimateur robuste, en fonction de positions de vignettes retrouvées dans ladite image précédente et en fonction des positions des vignettes dans l'image de référence.

6. Procédé (20) selon la revendication 5, dans lequel la transformation de recalage globale prédite pour l'image de poursuite traitée correspond à la transformation de recalage globale estimée entre l'image de référence et l'image qui précède l'image de poursuite traitée dans la séquence d'images.

7. Procédé (20) selon la revendication 5, dans lequel la détermination de la transformation de recalage globale prédite pour l'image de poursuite traitée comporte :

   - une estimation d'une transformation de recalage dite locale entre les deux images qui précèdent l'image de poursuite traitée dans la séquence d'images,
   - une combinaison de ladite transformation de recalage locale estimée et de la transformation de recalage globale estimée entre l'image de référence et l'image qui précède l'image de poursuite traitée dans la séquence d'images.

8. Procédé (20) selon l'une quelconque des revendications 5 à 7, dans lequel l'estimateur robuste attribue, à chaque vignette retrouvée dans une image de poursuite, un indicateur de compatibilité avec la transformation de recalage globale estimée, et dans lequel seules des vignettes retrouvées qui sont compatibles avec la transformation de recalage globale estimée d'après leurs indicateurs de compatibilité sont conservées en tant que vignettes retrouvées.

9. Procédé (20) selon l'une quelconque des revendications précédentes, dans lequel la recherche des vignettes dans l'image de poursuite traitée comporte :

- un recalage (S230) de l'image de référence en appliquant à ladite image de référence la transformation de recalage globale prédite pour l'image de poursuite traitée,
- une poursuite (S231) des vignettes dans l'image de poursuite traitée en utilisant l'image de référence recalée.

10. Procédé (20) selon la revendication 9, dans lequel seules les vignettes de l'image de référence sont recalées en appliquant la transformation de recalage globale prédite.

11. Procédé (20) selon la revendication 10, dans lequel le recalage d'une vignette utilise une approximation locale de la transformation de recalage globale prédite obtenue par un développement limité de ladite transformation de recalage globale prédite au niveau de la position prédite pour ladite vignette dans l'image de poursuite traitée.

12. Procédé (20) selon l'une quelconque des revendications précédentes, dans lequel les positions des vignettes sont déterminées de manière aléatoire dans l'image de référence.

13. Procédé (20) selon l'une quelconque des revendications précédentes, dans lequel, l'image de référence étant décomposée en une pluralité de sous-images, les positions des vignettes sont déterminées de sorte que chaque sous-image parmi la pluralité de sous-images de l'image de référence comporte au moins une vignette.

14. Procédé (20) selon l'une quelconque des revendications précédentes, comportant une sélection d'une nouvelle image de référence lorsqu'un critère prédéterminé de renouvellement d'image de référence est vérifié.

15. Procédé (20) selon la revendication 14, dans lequel le critère de renouvellement d'image de référence est vérifié lorsqu'une proportion de vignettes pouvant être poursuivies dans l'image de poursuite suivante est inférieure à un seuil prédéterminé et/ou lorsque les vignettes pouvant être poursuivies dans l'image de poursuite suivante présentent une répartition spatiale insuffisante dans ladite image de poursuite suivante.

16. Procédé (20) selon la revendication 14 ou 15, dans lequel les vignettes pour la nouvelle image de référence comportent des vignettes de l'image de référence précédente qui ont pu être poursuivies jusqu'à la nouvelle image de référence, complétées par des vignettes dont les positions sont déterminées dans ladite nouvelle image de référence indépendamment d'un contenu de ladite nouvelle image de référence.

17. Procédé (60) d'estimation du mouvement d'un engin (10) aérien ou spatial, ledit mouvement étant estimé au moins en fonction de positions, dans une séquence d'images acquise par un senseur de vision (11) embarqué dans ledit engin, de vignettes poursuivies dans ladite séquence d'images, les positions desdites vignettes poursuivies dans la séquence d'images étant déterminées selon un procédé (20) selon l'une quelconque des revendications précédentes.

18. Produit programme d'ordinateur comportant des instructions qui, lorsqu'elles sont exécutées par au moins un processeur, configurent ledit au moins un processeur pour mettre en oeuvre un procédé (20, 60) selon l'une quelconque des revendications 1 à 17.

19. Dispositif de calcul (12) comportant au moins un processeur et au moins une mémoire, ledit au moins processeur étant configuré pour mettre en oeuvre un procédé (20, 60) selon l'une quelconque des revendications 1 à 17.

20. Engin (10) aérien ou spatial, comportant au moins un senseur de vision (11) et un dispositif de calcul (12) selon la revendication 19.

**Patentansprüche**

1. Verfahren (20) zur Verarbeitung einer Bildsequenz einer Szene, wobei die Bilder der Sequenz nacheinander von einem Bildsensor (11) erfasst werden, wobei das Verfahren **dadurch gekennzeichnet ist, dass** es zumindest aufweist:

- eine Bestimmung (S20) von Positionen von Vignetten in einem sogenannten Referenzbild, wobei die Bestimmung der Positionen der Vignetten in dem Referenzbild unabhängig von dem Inhalt des Referenzbilds erfolgt, und
- ausgehend von den Positionen der Vignetten in dem Referenzbild, eine Nachverfolgung der Vignetten in jedem von mehreren sogenannten Nachverfolgungsbildern, die nach dem Referenzbild erfasst werden, wobei für jedes verarbeitete Nachverfolgungsbild die Nachverfolgung der Vignetten aufweist:

- eine Bestimmung (S21) einer vorausgesagten globalen Anpassungstransformation zwischen dem Referenzbild und dem verarbeiteten Nachverfolgungsbild,
- eine Voraussage (S22) der Positionen der Vignetten in dem verarbeiteten Nachverfolgungsbild als Funktion der Positionen der Vignetten in dem Referenzbild und der vorausgesagten globalen Anpassungstransformation für das verarbeitete Nachverfolgungsbild,
- eine Suche (S23) nach Vignetten in dem verarbeiteten Nachverfolgungsbild mithilfe der vorausgesagten Positionen der Vignetten.

2. Verfahren (20) nach Anspruch 1, in welchem die vorausgesagte globale Anpassungstransformation ein Modell einer von einer Relativbewegung zwischen dem Bildsensor und der Szene eingebrachten Bewegung aufweist.

3. Verfahren (20) nach Anspruch 2, in welchem das Bewegungsmodell einer Homographie entspricht.

4. Verfahren (20) nach Anspruch 2 oder 3, in welchem die vorausgesagte globale Anpassungstransformation ein Modell einer von dem Bildsensor eingebrachten optischen Verzerrung aufweist.

5. Verfahren (20) nach einem der vorstehenden Ansprüche, in welchem für die Nachverfolgungsbilder ab dem zweiten Nachverfolgungsbild nach dem Referenzbild die vorausgesagte globale Anpassungstransformation für das verarbeitete Nachverfolgungsbild als Funktion einer geschätzten globalen Anpassungstransformation zwischen dem Referenzbild und einem Bild, das dem verarbeiteten Nachverfolgungsbild in der Bildsequenz vorausgeht, bestimmt wird, wobei die geschätzte globale Anpassungstransformation mithilfe eines robusten Schätzers als Funktion von Positionen von in dem vorausgehenden Bild wiedergefundenen Vignetten und als Funktion der Positionen der Vignetten in dem Referenzbild bestimmt wird.

6. Verfahren (20) nach Anspruch 5, in welchem die vorausgesagte globale Anpassungstransformation für das verarbeitete Nachverfolgungsbild der geschätzten globalen Anpassungstransformation zwischen dem Referenzbild und dem Bild, das dem verarbeiteten Nachverfolgungsbild in der Bildsequenz vorausgeht, entspricht.

7. Verfahren (20) nach Anspruch 5, in welchem die Bestimmung der vorausgesagten globalen Anpassungstransformation für das verarbeitete Nachverfolgungsbild aufweist:

- eine Schätzung einer sogenannten lokalen Anpassungstransformation zwischen den zwei Bildern, die dem verarbeiteten Nachverfolgungsbild in der Bildsequenz vorausgehen,
- eine Kombination der geschätzten lokalen Anpassungstransformation und der geschätzten globalen Anpassungstransformation zwischen dem Referenzbild und dem Bild, das dem verarbeiteten Nachverfolgungsbild in der Bildsequenz vorausgeht.

8. Verfahren (20) nach einem der Ansprüche 5 bis 7, in welchem der robuste Schätzer jeder in einem Nachverfolgungsbild wiedergefundenen Vignette einen Kompatibilitätsindikator, der eine Kompatibilität mit der geschätzten globalen Anpassungstransformation repräsentiert, zuordnet und in welchem nur die wiedergefundenen Vignetten, die mit der geschätzten globalen Anpassungstransformation gemäß ihren Kompatibilitätsindikatoren kompatibel sind, als wiedergefundene Vignetten beibehalten werden.

9. Verfahren (20) nach einem der vorstehenden Ansprüche, in welchem die Suche nach Vignetten in dem verarbeiteten Nachverfolgungsbild aufweist:

- eine Anpassung (S230) des Referenzbilds durch Anwenden der vorausgesagten globalen Anpassungstransformation für das verarbeitete Nachverfolgungsbild auf das Referenzbild,
- eine Nachverfolgung (S231) der Vignetten in dem verarbeiteten Nachverfolgungsbild unter Verwendung des angepassten Referenzbilds.

10. Verfahren (20) nach Anspruch 9, in welchem nur die Vignetten des Referenzbilds durch Anwenden der vorausgesagten globalen Anpassungstransformation angepasst werden.

11. Verfahren (20) nach Anspruch 10, in welchem die Anpassung einer Vignette eine lokale Annäherung der vorausgesagten globalen Anpassungstransformation verwendet, die durch eine begrenzte Entwicklung der vorausgesagten globalen Anpassungstransformation im Bereich der vorausgesagten Position für die Vignette in dem verarbeiteten Nachverfolgungsbild gewonnen wird.

12. Verfahren (20) nach einem der vorstehenden Ansprüche, in welchem die Positionen der Vignetten auf zufällige Weise in dem Referenzbild bestimmt werden.

**13.** Verfahren (20) nach einem der vorstehenden Ansprüche, in welchem mit einem Referenzbild, das in mehrere Teilbilder zerlegt ist, die Positionen der Vignetten so bestimmt werden, dass jedes Teilbild der mehreren Teilbilder des Referenzbilds mindestens eine Vignette aufweist.

**14.** Verfahren (20) nach einem der vorstehenden Ansprüche, aufweisend eine Auswahl eines neuen Referenzbilds, wenn ein vorgegebenes Kriterium für Referenzbilderneuerung verifiziert ist.

**15.** Verfahren (20) nach Anspruch 14, in welchem das Referenzbilderneuerungskriterium verifiziert ist, wenn ein Anteil von Vignetten, die in dem nächsten Nachverfolgungsbild nachverfolgt werden können, unter einer vorgegebenen Schwelle ist und/oder die Vignetten, die in dem nächsten Nachverfolgungsbild nachverfolgt werden können, eine ungenügende räumliche Verteilung in dem nächsten Nachverfolgungsbild haben.

**16.** Verfahren (20) nach Anspruch 14 oder 15, in welchem die Vignetten für das neue Referenzbild Vignetten des vorausgehenden Referenzbilds aufweisen, die bis zu dem neuen Referenzbild nachverfolgt werden konnten, ergänzt durch Vignetten, deren Positionen in dem neuen Referenzbild unabhängig von einem Inhalt des neuen Referenzbilds bestimmt.

**17.** Verfahren (60) zum Schätzen der Bewegung eines Luft- oder Raumfahrzeugs (10), wobei die Bewegung zumindest als Funktion von Positionen von Vignetten in einer Bildsequenz, die von einem Bildsensor an Bord des Fahrzeugs erfasst wird, geschätzt wird, wobei die Vignetten in der Bildsequenz nachverfolgt werden und die Positionen der nachverfolgten Vignetten in der Bildsequenz gemäß einem Verfahren (20) nach einem der vorstehenden Ansprüche bestimmt werden.

**18.** Computerprogrammprodukt aufweisend Befehle, die, wenn sie von mindestens einem Prozessor ausgeführt werden, den mindestens einen Prozessor konfigurieren, um ein Verfahren (20, 60) nach einem der Ansprüche 1 bis 17 durchzuführen.

**19.** Berechnungsvorrichtung (12) aufweisend mindestens einen Prozessor und mindestens einen Speicher, wobei der mindestens eine Prozessor konfiguriert ist, um ein Verfahren (20, 60) nach einem der Ansprüche 1 bis 17 durchzuführen.

**20.** Luft- oder Raumfahrzeug (10), aufweisend mindestens einen Bildsensor (11) und eine Berechnungsvorrichtung (12) nach Anspruch 19.

**Claims**

**1.** A method (20) for processing a sequence of images of a scene, said images of the sequence being acquired successively by a vision sensor (11), said method being **characterised in that** it includes at least:

- a determination (S20), in an image called reference image, of positions of thumbnails, said determination of the positions of the thumbnails in the reference image being carried out independently of the content of said reference image, and
- a tracking of said thumbnails, from the positions of the thumbnails in the reference image, in each of a plurality of images called tracking images acquired after said reference image, the tracking of the thumbnails including, for each processed tracking image:

- a determination (S21) of a predicted global registration transformation between the reference image and the processed tracking image,
- a prediction (S22) of the positions of the thumbnails, in the processed tracking image, according to the positions of the thumbnails in the reference image and the global registration transformation predicted for the processed tracking image,
- a search (S23) for the thumbnails in the processed tracking image, from the predicted positions of the thumbnails.

**2.** The method (20) according to claim 1, wherein the predicted global registration transformation includes a movement model introduced by a relative movement between the vision sensor and the scene.

**3.** The method (20) according to claim 2, wherein the movement model corresponds to a homography.

**4.** The method (20) according to claim 2 or 3, wherein the predicted global registration transformation includes an optical distortion model introduced by the vision sensor.

**5.** The method (20) according to any one of the preceding claims, wherein, for the tracking images from the second tracking image following the reference image, the global registration transformation predicted for the processed tracking image is determined according to an estimated global registration transformation between the reference image and an image which precedes said processed tracking image in the sequence of images, the estimated global registration transformation being determined, by means of a robust estimator, according to positions of thumbnails found in said previous image and according to the positions of the thumbnails in the reference image.

6. The method (20) according to claim 5, wherein the global registration transformation predicted for the processed tracking image corresponds to the global registration transformation estimated between the reference image and the image which precedes the processed tracking image in the image sequence.

7. The method (20) according to claim 5, wherein the determination of the global registration transformation predicted for the processed tracking image includes:

- an estimation of a registration transformation called local registration transformation between the two images which precede the processed tracking image in the sequence of images,
- a combination of said estimated local registration transformation and the estimated global registration transformation between the reference image and the image which precedes the processed tracking image in the sequence of images.

8. The method (20) according to any one of claims 5 to 7, wherein the robust estimator assigns, to each thumbnail found in a tracking image, a compatibility indicator with the estimated global registration transformation, and wherein only found thumbnails that are compatible with the global registration transformation estimated based on their compatibility indicators are kept as found thumbnails.

9. The method (20) according to any one of the preceding claims, wherein the search for thumbnails in the processed tracking image includes:

- a registration (S230) of the reference image by applying to said reference image the global registration transformation predicted for the processed tracking image,
- a tracking (S231) of the thumbnails in the processed tracking image using the registered reference image.

10. The method (20) according to claim 9, wherein only the thumbnails of the reference image are registered by applying the predicted global registration transformation.

11. The method (20) according to claim 10, wherein the registration of a thumbnail uses a local approximation of the predicted global registration transformation obtained by a limited development of said predicted global registration transformation at the predicted position for said thumbnail in the processed tracking image.

12. The method (20) according to any one of the preceding claims, wherein the positions of the thumbnails are determined randomly in the reference image.

13. The method (20) according to any one of the preceding claims, wherein, the reference image being decomposed into a plurality of sub-images, the positions of the thumbnails are determined so that each sub-image among the plurality of sub-images of the reference image includes at least one thumbnail.

14. The method (20) according to any one of the preceding claims, including a selection of a new reference image when a predetermined reference image renewal criterion is verified.

15. The method (20) according to claim 14, wherein the reference image renewal criterion is verified when a proportion of thumbnails that can be tracked in the next tracking image is less than a predetermined threshold and/or when the thumbnails that can be tracked in the next tracking image have insufficient spatial distribution in said next tracking image.

16. The method (20) according to claim 14 or 15, wherein the thumbnails for the new reference image include thumbnails of the previous reference image which could be tracked to the new reference image, supplemented by thumbnails whose positions are determined in said new reference image independently of the content of said new reference image.

17. A method (60) for estimating the movement of an aerial or space vehicle (10), said movement being estimated at least according to positions, in a sequence of images acquired by a vision sensor (11) on board said device, of thumbnails tracked in said sequence of images, the positions of said thumbnails tracked in the sequence of images being determined according to a method (20) according to any one of the preceding claims.

18. A computer program product including instructions which, when executed by at least one processor, configure said at least one processor to implement a method (20, 60) according to any one of claims 1 to 17.

19. A calculation device (12) including at least one processor and at least one memory, said at least one processor being configured to implement a method (20, 60) according to any one of claims 1 to 17.

**EP 4 341 897 B1**

**20.** An aerial or space vehicle (10), including at least one vision sensor (11) and one calculation device (12) according to claim 19.

FIG. 1

Image de référence → Détermination positions de vignettes — S20

20

Image de poursuite $I_n$

Détermination transformation de recalage globale prédite — S21

Prédiction positions de vignettes — S22

Recherche vignettes — S23

FIG. 2

FIG. 3

a)

b)

FIG. 4

**FIG. 5**

**FIG. 6**

Image de
référence

S26 — Sélection nouvelle
image de
référence

Détermination
positions de
vignettes — S20

20

Image de
poursuite $I_n$

S25b

Détermination
transformation de
recalage globale
prédite — S21

S25a

Evaluation
critère de
renouvellement

Prédiction
positions des
vignettes — S22

Poursuite image
de poursuite $I_{n+1}$

S25

Recherche
vignettes — S23

## FIG. 7

80 —

Détermination
position de
vignettes dans
une séquence
d'images — S80

Estimation
mouvement du
porteur — S81

## FIG. 8

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2428934 A1

- EP 3227860 A1

**Littérature non-brevet citée dans la description**

- Multiphase Joint Segmentation-Registration and Object Tracking for Layered Images. **PING-FENT CHEN et al.** IEEE Transactions on Image Processing. IEEE, Juillet 2010, vol. 18, 1706-1719